**Europäisches Patentamt**

**European Patent Office**

**Office européen des brevets**

(19)

(11) **EP 1 355 433 A1**

(12) **EUROPEAN PATENT APPLICATION**

(43) Date of publication:
**22.10.2003 Bulletin 2003/43**

(51) Int Cl.⁷: **H04B 1/707**, H04B 7/26,
H04Q 7/38

(21) Application number: **03252342.5**

(22) Date of filing: **14.04.2003**

| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br> • **Nagato, Rie, c/o NTT DoCoMo**<br>   **Tokyo 100-6150 (JP)**<br> • **Nakamura, Osamu, c/o NTT DoCoMo**<br>   **Tokyo 100-6150 (JP)**<br> • **Utano, Takanori, c/o NTT DoCoMo**<br>   **Tokyo 100-6150 (JP)** |
|---|---|
| (30) Priority: **16.04.2002 JP 2002113828** | |
| (71) Applicant: **NTT DoCoMo, Inc.**<br>**Tokyo 100-6150 (JP)** | (74) Representative: **Rees, Alexander Ellison et al**<br>**Urquhart-Dykes & Lord,**<br>**30 Welbeck Street**<br>**London W1G 8ER (GB)** |

(54) **Radio station and radio network controller**

(57)     There is provided a radio station and a radio network controller performing communication by CDMA, able to change transmission speed in response to the propagation environment, and carry on communications without communication quality degradation. The radio station comprises a signal quality reception unit for receiving information of quality of the signals having been transmitted by the radio station, received by a party thereof, and sent to the radio station by the party, in which the information is measured from the received signals by the party, and a code multiplicity determination unit configured to determine a code multiplicity of signals transmitted from the radio station to the party based on the received information of signal quality. The radio station transmits the signals to the party using the determined code multiplicity.

FIG.4

Printed by Jouve, 75001 PARIS (FR)

**Description**

BACKGROUND OF THE INVENTION

1. Field of the Invention

The present invention relates to a radio network controller and a radio station able to control radio resources assignment of spread codes according to the propagation environment in communications using CDMA (Code Division Multiple Access).

2. Description of the Related Art

W-CDMA (Wideband Code Division Multiple Access) is a well known mobile communication scheme using CDMA. In W-CDMA, FDD (Frequency Division Duplex) is adopted for duplex communications. In addition to FDD, there is also a duplex system known as TDD (Time Division Duplex). In TDD, transmission frequencies are the same with reception frequencies, and these frequencies are divided by time and are used for interactive uplink and downlink communications.

In the IMT-2000 mobile communication system that is being standardized by the 3GPP (3rd Generation Partnership Project), which is a standards organization for the third generation mobile and wireless communication systems, in addition to the W-CDMA that utilizes the FDD, there is also a TD-CDMA (Time Division-Code Division Multiple Access) system utilizing the TDD. Since the TD-CDMA has the TDMA structure, it is able to assign users slot by slot, and hence able to assign each of a number of users a different time slot. Further, since code multiplexing is enabled at each slot, high-speed data transmission can be achieved by multiplexing codes at a time slot used by one user. Therefore, the TD-CDMA system enables flexible assignment of resources in response to traffic asymmetry in the downlink and uplink channels, and is considered to be superior to the FDD in respect of asymmetric traffic capacity.

In a CDMA system, because signals from other users act as interference, transmission power control is performed by keeping constant the ratio of the power of signals desired to be received at a mobile station or a base station to the power of interference signals emitted from other mobile stations or base stations. This ratio is known as SIR, standing for Signal to Interference Ratio. Therefore, in the CDMA system, the signal transmission power becomes low when the interference power becomes low, and the signal transmission power becomes high when the interference power becomes high.

In the CDMA system, the transmission data sequence is multiplied with spread codes (just abbreviated as "codes" below) and is spread to wideband signals for transmission. The high-rate data sequence in the spread bandwidth is called a chip, and the speed of variation of the spread data is called chip rate. The ratio of the chip rate to the symbol rate is called spreading factor, and is abbreviated as SF. If the chip rate after spreading is a constant, the amount of data able to be transmitted increases when the spreading factor decreases. Whereas, since the spreading factor deceases, the SIR needed to satisfy the desired quality requirements becomes larger.

In other words, under the transmission power control, the signal transmission power decreases when the interference power becomes low, so the interference to other users is reduced. On the other hand, under the condition that the transmission power control is not performed, if the signal transmission power is kept to be high even if the interference power becomes low, as a result, SIR increases. In this case, a larger amount of data can be transmitted by reducing the spreading factor SF.

In the TD-CDMA system as shown above, because users are divided by time slots, the interference between users can be relatively well suppressed. So, the amount of data to be transmitted (or the transmission speed) can be increased by keeping the signal transmission power constant when the interference power is low, and reducing the spreading factor SF while not performing transmission power control. This technique has been disclosed, for example, in the Japanese Unexamined Patent Publication (Kokai) No.2000-31884.

In the technique disclosed in the above publication, however, a base station needs to notify a mobile station of a change of the spreading factor, so overhead increases, and the data transmission speed decreases. Further, when a mobile station in communication with a base station moves and the interference power changes, the spreading factor in communication changes constantly, so the change of the spreading factor has to be processed in a short time. But to do that, the processing system, such as modulation and demodulation devices, becomes complicated, and the scale of the devices increases.

SUMMARY OF THE INVENTION

Accordingly, it is a general object of the present invention to solve the above problems of the related art.

A more specific object of the present invention is to provide a radio network controller and a radio station able to change a transmission speed in response to the propagation environment, and carry on communications without communication quality degradation.

To attain the above object, according to a first aspect of the present invention, there is provided a radio station configured to transmit signals to and receive signals from a party thereof through a radio link by Code Division Multiple Access, comprising a signal quality reception unit for receiving information of quality of the signals that have been transmitted by the radio station, received and sent to the radio station by the party, said information being measured from the received signals by the party, and a code multiplicity determination unit for determining a code multiplicity of signals transmitted from the radio station to the party based on the received information of signal quality, the radio station transmitting signals to the party by using the determined code multiplicity.

Preferably, in the above radio station, the code multiplicity determination unit comprises a storage unit for storing a plurality of code multiplicities in correspondence with data of said quality of signals.

Preferably, in the above radio station, the quality of signals includes one of a ratio of signal to noise, a ratio of signal to interference, and a signal error rate.

According to the first aspect of the present invention, at a radio station, such as a mobile station or a base station, the code multiplicity of downlink or uplink transmission signals is determined based on the downlink or uplink SIR or other signal quality information sent by a party of the radio station. That is, the information of SIR or others of one radio station is provided by its party, and the code multiplicity is determined in response to the condition of propagation environment. Therefore, for a radio station located in a good propagation environment, a code multiplicity is assigned to allow higher-speed communication, and for a radio station located in a poor propagation environment, a code multiplicity is assigned to allow communications at relatively lower speed to secure communication quality.

To attain the above object, according to a second aspect of the present invention, there is provided a radio station configured to transmit signals to and receive signals from a party thereof through a radio link by Code Division Multiple Access, comprising a propagation loss calculation unit for calculating loss of power of signals in propagation from the radio station to the party, a reception power estimation unit for estimating signal reception power of the party using the signal transmission power of the radio station and the measured loss of power, and a code multiplicity determination unit for determining a code multiplicity of signals transmitted from the radio station to the party based on the estimated signal reception power of the party, the radio station transmitting signals to the party by using the determined code multiplicity.

Preferably, in the above radio station, the propagation loss calculation unit comprises a first unit configured to receive signals from the party and measure signal reception power of the radio station, a second unit configured to receive data of signal transmission power of the party, and a third unit for calculating the loss of power of signals in propagation using the signal reception power of the radio station and the signal transmission power of the party.

Alternatively, in the above radio station, the propagation loss calculation unit comprises a fourth unit for receiving data of a distance between the radio station and the party, and said propagation loss deduction unit deduces the loss of power from the distance between the radio station and the party.

Preferably, in the above radio station, the code multiplicity determination unit comprises a storage unit for storing a plurality of code multiplicities in correspondence with data of said signal reception power of the party.

According to the second aspect of the present invention, a radio station, such as a mobile station or a base station, predicts the propagation environment between itself and its party from the reception power of the received signals, and determines the code multiplicity of the downlink or uplink transmission signals. That is to say, the propagation environment is predicted from the amplitudes (power) of the received signals, and the code multiplicity is determined in response to the propagation environment. Therefore, code multiplicity may be increased in a good propagation environment, and may be decreased in a poor propagation environment. As a result, it is possible to provide communication service of sufficiently high quality constantly and a communication speed fit for the propagation environment.

To attain the above object, according to a third aspect of the present invention, there is provided a radio network controller configured to control signal transmission and signal reception between radio stations through a radio link by Code Division Multiple Access, comprising a signal quality reception unit for receiving information of quality of signals having been transmitted by a first radio station, received and sent to the radio network controller by a second radio station, said information being measured by the second radio station from the received signals, a code multiplicity determination unit for determining a code multiplicity of signals transmitted from the first radio station to the second radio station based on the received information of signal quality; and a unit for sending the determined code multiplicity to the first radio station.

According to the third aspect of the present invention, at the radio network controller, the code multiplicity of uplink or downlink transmission signals is determined based on the uplink or downlink signal quality sent between two radio stations. That is, the information of signal quality of one radio station is provided by its party, and the code multiplicity is determined by the radio network controller in response to the condition of interference signals. Therefore, for a radio station located in a good propagation environment, a code multiplicity is assigned by the radio network controller to allow higher-speed communication, and for a radio station located in a poor propagation environment, a code multiplicity is assigned by the radio network controller to allow communications at relatively lower speed to prevent communication quality from being degraded.

These and other objects, features, and advantages of the present invention will become more apparent from the following detailed description of the preferred embodiments given with reference to the accompanying drawings.

BRIEF DESCRIPTION OF THE DRAWINGS

Fig. 1 is a schematic view showing a mobile communication system according to embodiments of the present invention;

Fig. 2 is a block diagram showing an example of a configuration of the mobile communication system according to a first embodiment of the present invention;

Fig. 3 is an example of a code assignment table;

Fig. 4 is a sequence chart showing an example of the procedure of determining the code multiplicity of downlink transmission signals from the base station to the mobile station;

Fig. 5 is a sequence chart showing an example of the procedure of determining the code multiplicity of uplink transmission signals from the mobile station to the base station;

Fig. 6 is a sequence chart showing another example of the procedure of determining the code multiplicity of downlink transmission signals from the base station to the mobile station;

Fig. 7 is a sequence chart showing another example of the procedure of determining the code multiplicity of uplink transmission signals from the mobile station to the base station;

Fig. 8 is a schematic view showing an example of operation of a mobile communication system for determining a code multiplicity of uplink transmission signals from a mobile station to a base station, according to a second embodiment of the present invention;

Fig. 9 is a sequence chart showing an example of the operation of the mobile communication system shown in FIG. 8 for determining the code multiplicity of the uplink transmission signals from a mobile station to a base station;

Fig. 10 is a sequence chart showing an example of the procedure of determining a code multiplicity of downlink transmission signals from the base station to the mobile station, according to the second embodiment of the present invention; and

Fig. 11 is a block diagram showing another example of the configuration of the mobile communication system according to the second embodiment.

DESCRIPTION OF THE PREFERRED EMBODIMENTS

Below, preferred embodiments of the present invention will be explained with reference to the accompanying drawings.

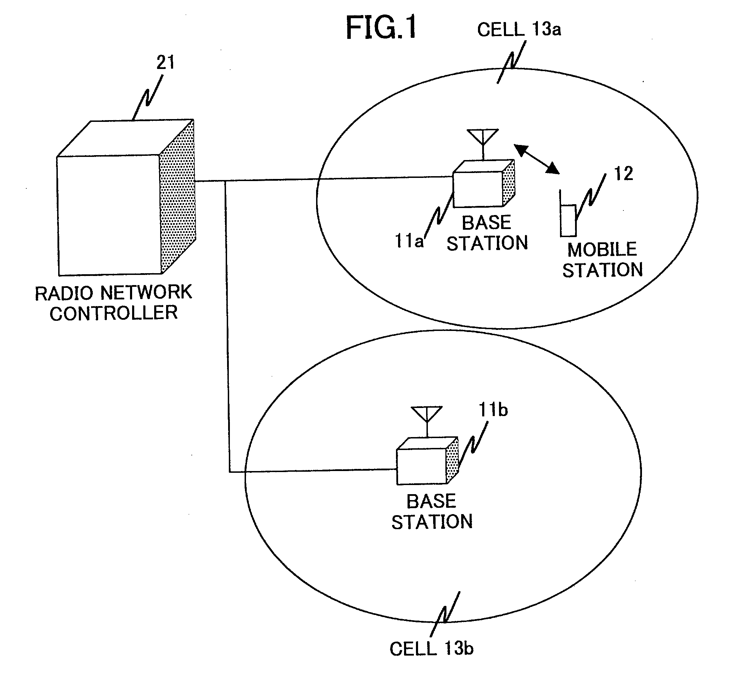

FIG. 1 is a schematic view showing a configuration of a mobile communication system according to embodiments of the present invention.

For example, the mobile communication system shown in FIG. 1 is a TD-CDMA system, and is comprised of a base station 11a, a base station 11b, a mobile station 12, and a radio network controller 21. The base station 11a and base station 11b have service areas (called "cell") 13a and 13b, respectively. In this example, the mobile station 12 is located in the cell 13a of the base station 11a, and receives signals from or transmits signals to the base station 11a by CDMA through radio links. The radio network controller 21 is connected with a number of base stations (base stations 11a and 11b in this example), and controls the radio connections with them.

Below, explanations are made of examples of embodiments of the present invention applied to the above system. Note that in the following explanations, the same reference numerals are used to represent the same elements.

The First Embodiment

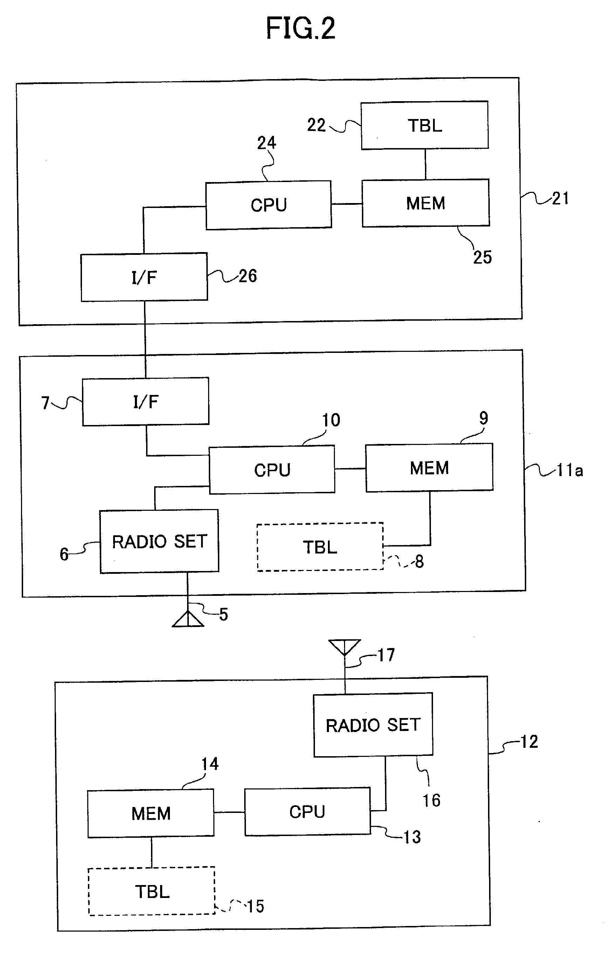

FIG. 2 is a block diagram showing an example of a configuration of the mobile communication system according to a first embodiment of the present invention.

As shown in FIG. 2, the mobile communication system shown in FIG. 1 includes the radio network controller 21, the base station 11a and the mobile station 12.

The radio network controller 21 is comprised of a controller (abbreviated as CPU) 24, a memory (abbreviated as MEM) 25 connected to the controller 24 for storing, for example, a code assignment table (abbreviated as TBL) 22 as described below, an interface 26 for connection with the base station 11a. The interface 26 is connected to the controller 24.

The base station 11a is comprised of a controller (abbreviated as CPU) 10, a memory (abbreviated as MEM) 9 connected to the controller 10 for storing data, an interface 7 for connection with the radio network controller 21, a radio set 6 connected to the controller 10, and an antenna 5 for receiving and transmitting radio signals, for example, by the TDD transmission method through radio links. The interface 7 is connected to the controller (abbreviated as CPU) 10. Optionally, as described later, a code assignment table (abbreviated as TBL) 8 may be stored in the memory 9.

The radio network controller 21 and the base station 11a are connected to each other through the interface 26 and the interface 7.

The mobile station 12 is comprised of a controller (abbreviated as CPU) 13, a memory (abbreviated as MEM) 14 connected to the controller 13 for storing data, a radio set 16 connected to the controller 13, and an antenna 17 for receiving and transmitting radio signals, for example, by the TDD transmission method through radio links. Optionally, a code assignment table (abbreviated as TBL) 15 may be stored in the memory 14 as described below.

Controlled by the controller 10, the radio set 6 performs necessary processing, such as receiving and transmitting, encoding and decoding, modulating and demodulating, interleaving and deinterleaving radio signals. Similarly, radio set 16 performs similar processing under the control of the controller 13.

The radio network controller 21 is connected to a number of base stations, such as the base station 11a and 11b, and controls their radio connections.

In this example, the radio network controller 21 has a code assignment table 22, which records the code multiplicity k associated with an SIR provided by the mobile station 12 through the base station 11a.

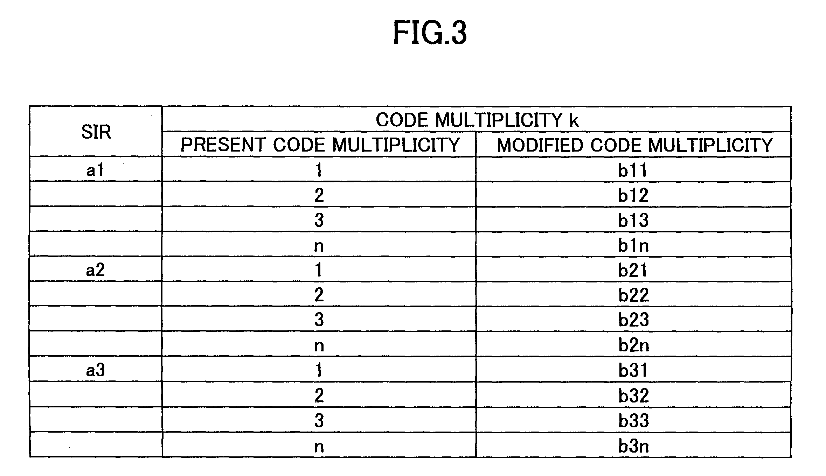

FIG. 3 shows an example of the code assignment table 22.

As shown in FIG. 3, the code assignment table 22 has the two major fields of SIR and code multiplicity k, listing the calculated optimal code multiplicity k for a given SIR. In the table shown in FIG. 3, the desired code multiplicity k, which is expressed as "modified code multiplicity", is calculated for each SIR on the basis of the code multiplicity being used presently, which is expressed as "present code multiplicity" in FIG. 3.

Below, a method for calculating the modified code multiplicity k is explained in detail.

Method of Calculating Code Multiplicity k

In this example, a quantity SIR_req is defined to represent the required SIR per code for desired communication quality at the time when a signal is received, and a quantity SIR_rx is defined to represent the actual SIR for each code when a signal is received. If the code multiplicity before modification (that is, the present code multiplicity) is denoted as k', the modified code multiplicity k can be determined on condition that the following formula is satisfied.

$$k'*SIR\_rx = k*SIR\_req$$

That is, the modified code multiplicity k is determined as below.

$$k = k'*(SIR\_rx/SIR\_req) \qquad (1)$$

From equation (1), the optimal code multiplicity k can be calculated if the present code multiplicity k', SIR_req, and SIR_rx are known. The value of SIR_req is determined by simulations or by experimental measurements.

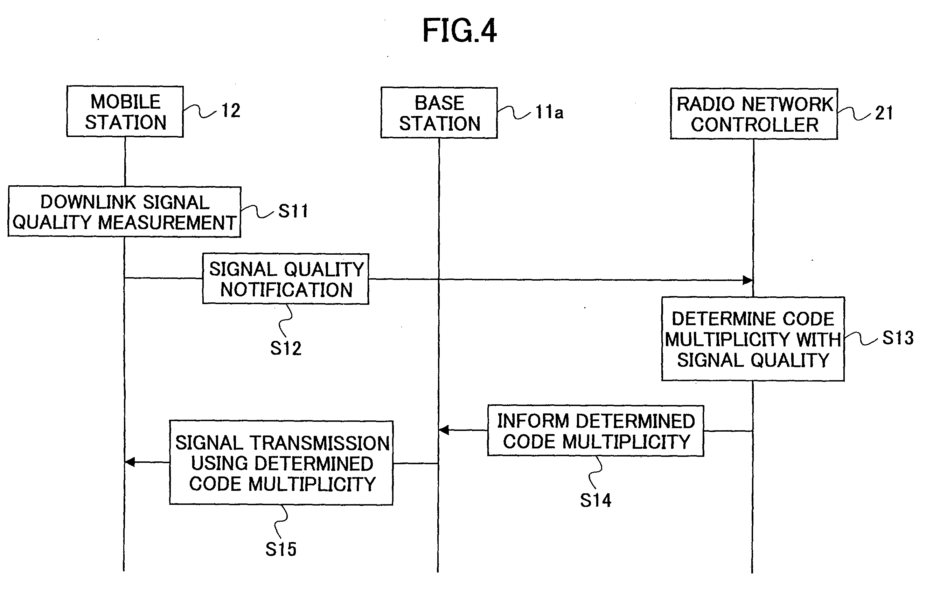

Next, following the sequence chart in FIG. 4, explanations are made of the operation for determining the code multiplicity k when signals are transmitted from the base station 11a to the mobile station 12.

FIG. 4 is a sequence chart showing an example of the procedure of determining the code multiplicity of downlink transmission signals from the base station 11a to the mobile station 12.

In the following explanations referring to the flow chart in FIG. 4, it is assumed that the present code multiplicity k' is a known quantity.

In FIG. 4, the base station is abbreviated as BS, the mobile station is abbreviated as MS, and the radio network controller is abbreviated as RNC.

In the following explanation, the transmission power for transmitting signals from the base station 11a to the mobile station 12 is represented by Ptx11.

In step S11 as shown in FIG. 4, in the course of communication or at the beginning of communication between the mobile station 12 and the base station 11a, the mobile station 12 measures the power Prx11 of the received signals from the base station 11a and the power of the interference signals, and calculates the SIR.

In step S12, the mobile station 12 notifies the radio network controller 21 of the calculated value of SIR (that is, the SIR_rx) through the base station 11a.

In step S13, after receiving the calculated value of SIR from the base station 11a, the radio network controller 21 makes reference to code assignment table 22 stored in memory 25, and determines the code multiplicity k corresponding to the specified SIR.

In step S14, the radio network controller 21 sends information of the code multiplicity k to the base station 11a.

In step S15, the base station 11a uses the code multiplicity k sent from the radio network controller 21 to transmit signals to the mobile station 12 with the transmission power Ptx.

Note that, since the value of the SIR_req depends on the type of services, the SIR_req may have several values. In this case, in order to determine the code multiplicity k, the SIR_req needs be determined first, and then the code multiplicity matching the determined SIR_req can be found by referring to the code assignment table 22 in FIG. 3.

In the above example, an explanation is made of a case in which the downlink transmission signal code multiplicity is determined. The same method is applicable to determination of the signal code multiplicity for uplink transmission, that is, signal transmission from the mobile station 12 to the base station 11a.

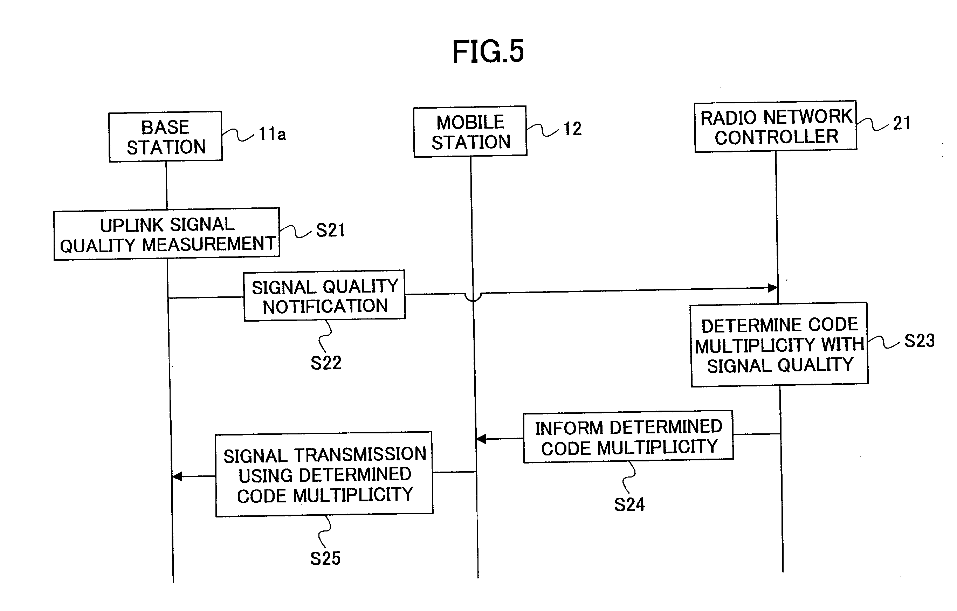

Next, following the sequence chart in FIG. 5, explanations are made of the operation for determining the code multiplicity k when signals are transmitted from the mobile station 12 to the base station 11a.

Fig. 5 is a sequence chart showing an example of the procedure of determining the code multiplicity of uplink transmission signals from the mobile station to the base station;

FIG. 5 is basically the same as FIG. 4, except that the roles of the base station 11a and the mobile station 12 are reversed compared with FIG. 4. In this case, the code assignment table to be used should be modified relative to the code assignment table 22.

In step S21 as shown in FIG. 5, in the course of communication or at the beginning of communication between the mobile station 12 and the base station 11a, the base station 11a measures the power Prx12 of the received signals from the mobile station 12 and the power of the interference signals, and calculates the SIR.

In step S22, the base station 11a notifies the radio network controller 21 of the calculated value of SIR (that is, the SIR_rx).

In step S23, after receiving the calculated value of SIR from the base station 11a, the radio network controller 21 makes reference to code assignment table 22 stored in memory 25, and determines the code multiplicity k corresponding to the specified SIR.

In step S24, the radio network controller 21 sends information of the code multiplicity k to the mobile station 12 through the base station 11a.

In step S25, the mobile station 12 uses the code multiplicity k sent from the radio network controller 21 to transmit signals to the base station 11a with a specified transmission power.

In the above examples, explanations are made of cases in which the downlink or uplink transmission signal code multiplicity is determined in the radio network controller 21. The signal code multiplicity k may also be determined by the base station 11a or the mobile station 12. In this case, the base station 11a or the mobile station 12 needs to have a code assignment table stored in its memory, as done above by the radio network controller 21.

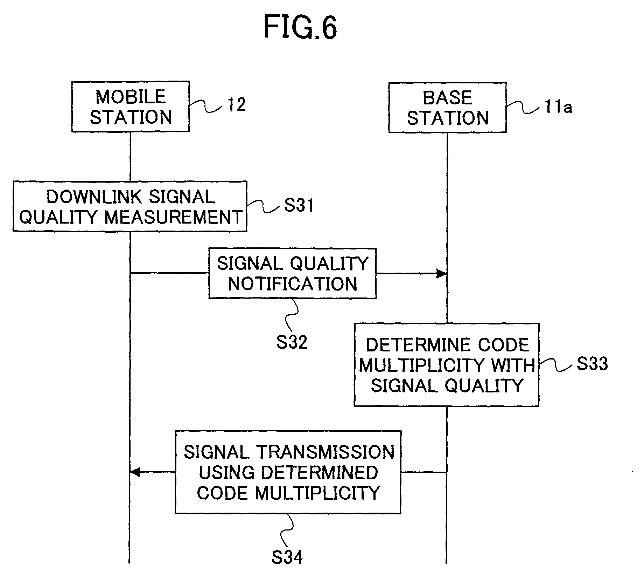

Next, following the sequence chart in FIG. 6, an explanation is made of the operation for determining the code multiplicity k by the base station 11a when signals are transmitted from the base station 11a to the mobile station 12. In this case, the code assignment table 8 similar with the code assignment table 22 stored in the memory 9 of the base station 11a is used for determining the code multiplicity.

In step S31 as shown in FIG. 6, in the course of communication or at the beginning of communication between the mobile station 12 and the base station 11a, the mobile station 12 measures the power of the received signals from the base station 11a and the power of the interference signals, and calculates the SIR.

In step S32, the mobile station 12 notifies the base station 11a of the calculated value of SIR (that is, the SIR_rx) through the radio line.

In step S33, after receiving the deduced value of SIR from the mobile station 12, the base station makes reference to the code assignment table 8 stored in the memory 9, and determines the code multiplicity k corresponding to the specified SIR.

In step S34, the base station 11a uses the determined code multiplicity k to transmit signals to the mobile station 12 with a specified transmission power.

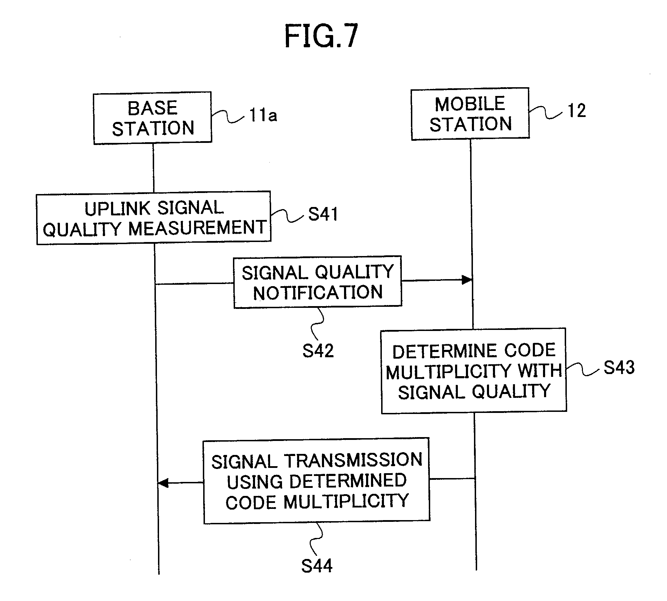

Next, following the sequence chart in FIG. 7, an explanation is made of the operation for determining the code multiplicity k by the mobile station 12 when signals are transmitted from the mobile station 12 to the base station 11a. In this case, the code assignment table 15 similar to the code assignment table 22 stored in the memory 14 of the mobile station 12 is used for determining the code multiplicity.

In step S41 as shown in FIG. 7, in the course of communication or at the beginning of communication between the mobile station 12 and the base station 11a, the base station 11a measures the power of the received signals from the mobile station 12 and the power of the interference signals, and calculates the SIR.

In step S42, the base station 11a notifies the mobile station 12 of the calculated value of SIR (that is, the SIR_rx) through the radio line.

In step S43, after receiving the calculated value of SIR from the base station 11a, the mobile station makes reference to the code assignment table 15 stored in the memory 14, and determines the code multiplicity k corresponding to the specified SIR.

In step S44, the mobile station 12 uses the determined code multiplicity k to transmit signals to the base station 11a with a specified transmission power.

In the above embodiment, the communication system is a TD-CDMA system. In a TD-CDMA system, the TDD is used in which the frequencies of the downlink and uplink channels are the same, so, the propagation environment of the downlink channels is similar to that of the uplink case. Therefore, from the uplink signals received by a base station, it is possible to predict SIR or amplitudes of the downlink signals from the base station when the downlink signals are received by a mobile station. In other words, when applying the method of the present embodiment to a system in which TDD is used, the mobile station 12 may use the code multiplicity k of the signals received from the base station 11a as the code multiplicity of the uplink signals to be transmitted from the mobile station 12 to the base station 11a.

Furthermore, in the above embodiment, as for the quality of signals, in addition to SIR (Signal to Interference Ratio), use can also be made of signal to noise ratio, or the signal error rate.

Summarizing the first embodiment, according to the present embodiment, at the radio network controller 21 or the base station 11a, the code multiplicity of the downlink transmission signals is determined based on the downlink SIR provided by the mobile station 12. On the other hand, at the mobile station 12, the code multiplicity of the uplink transmission signals is determined based on the uplink SIR provided by the base station 11a. That is to say, in this embodiment, the information of SIR of one radio station is informed by its party, and the code multiplicity is determined in response to the condition of interference signals. Therefore, for a mobile station located in a good propagation environment, a code multiplicity is assigned to allow higher-speed communication, and for a mobile station located in a poor propagation environment, a code multiplicity is assigned to allow communications at relatively lower speed to prevent communication quality from being degraded. So it is possible to provide communication service of sufficiently high quality constantly and a communication speed fit for the propagation environment. Furthermore, because it is the code multiplicity but not the spreading factor that is used as the parameter varied in response to the propagation environment, a complicated modulation and demodulation device is not necessary.

The Second Embodiment

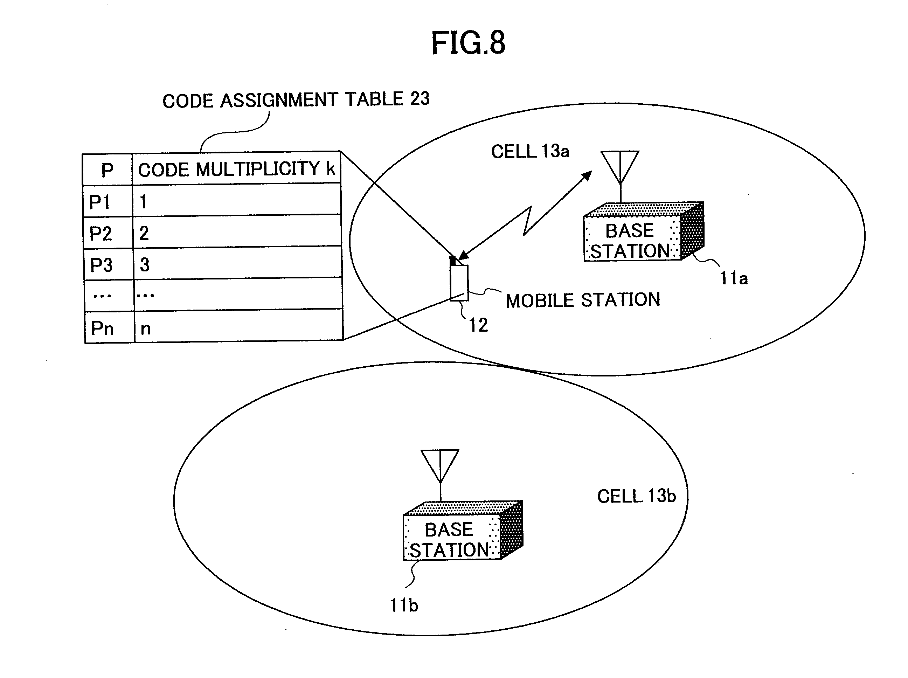

FIG. 8 is a schematic view showing an example of operation of a mobile communication system for determining a code multiplicity of uplink transmission signals from a mobile station to a base station, according to a second embodiment of the present invention. The mobile communication system in FIG. 8 is the same as that in FIG. 1.

That is, the mobile communication system shown in FIG. 8 is a TD-CDMA system, and is comprised of a base station 11a, a base station 11b, and a mobile station 12. In this embodiment, the radio network controller 21 in FIG. 1 is not explicitly shown. The base station 11a and base station 11b have service areas 13a and 13b, respectively, and the mobile station 12 is located in the cell 13a of the base station 11a, receiving signals from or transmitting signals to the base station 11a by CDMA through radio links.

In addition, the configurations of the mobile station 12 and the base station 11a are the same as those shown in FIG. 2.

Furthermore, as shown in FIG. 8, the mobile station 12 has a code assignment table 23, which records the code multiplicity k associated with an estimated reception power P at the time when a base station receives the signals transmitted from the mobile station 12. The code assignment table 23 has two major fields for the estimated reception power P and the code multiplicity k, including n records. In this table, the desired code multiplicity k is calculated in correspondence with the estimated reception power P.

Next, an explanation is made of a method for calculating the code multiplicity k from the estimated reception power P.

In this example, a quantity Prx_req is defined to represent the required reception power for each code for desired communication quality, a quantity Ptx is defined to represent the transmission power related to all codes of the transmission signals, a quantity Prx is defined to represent the reception power related to all codes of the reception signals at the time of signal reception, and a quantity L is defined to represent the propagation loss between a mobile station and a base station.

The code multiplicity k is the ratio of the reception power related to all codes of the reception signals over the required reception power for each code. So, the code multiplicity k is expressed by the following equation.

$$k=Prx/Prx\_req$$
$$=(Ptx/L)/Prx\_req \qquad (2)$$

In equation (2), if Prx and Prx_req are known, the code multiplicity k can be calculated easily. The propagation loss L between a mobile station and a base station can be calculated from the distance D between them. So if the distance D is known, the propagation loss L is calculated from the distance D, and the obtained value is assigned to L in equation (2), the code multiplicity k can be calculated easily. The value of Prx_req is determined by simulations or by experimental measurements. Since the code multiplicity k is an integer, the calculated k is reduced to an integer.

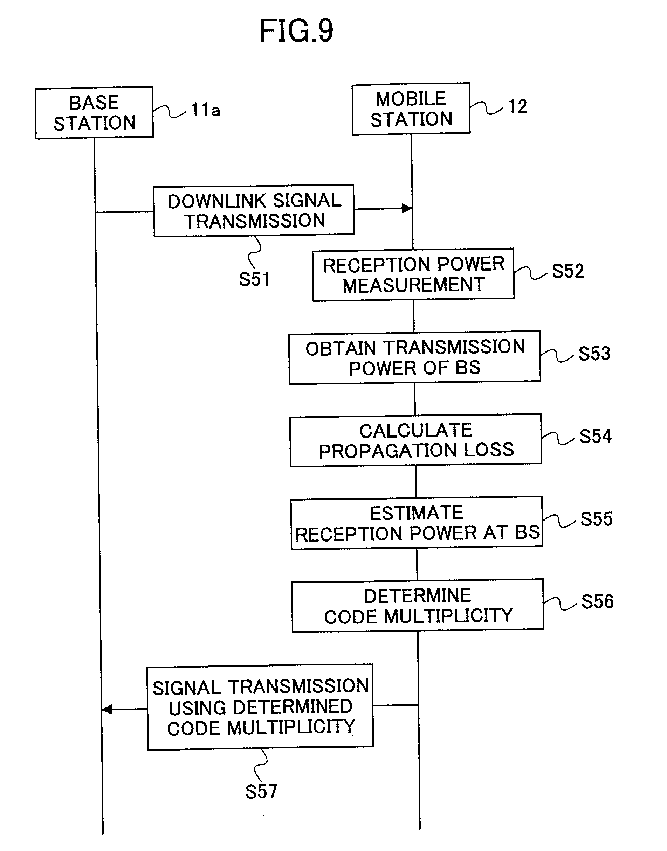

Next, following the sequence chart in FIG. 9, an explanation is made of the operation for determining the code multiplicity k when signals are transmitted from the mobile station 12 to the base station 11a.

FIG. 9 is a sequence chart showing an example of the operation of the mobile communication system shown in FIG. 8 for determining the code multiplicity k of the uplink transmission signals from the mobile station 12 to the base station 11a. In FIG. 9, the base station is abbreviated as BS, and the mobile station is abbreviated as MS.

In the following explanation, the transmission powers of the mobile station 12 and the base station 11a are represented by Ptx12 and Ptx11, respectively; the reception power at the mobile station 12 for receiving signals from the base station 11a is represented by Prx11; the reception power at the base station 11a for receiving signals from the mobile station 12 is represented by Prx12; and L is the propagation loss between the mobile station 12 and the base station 11a.

In step S51 as shown in FIG. 9, in the course of communication or at the beginning of communication between the mobile station 12 and the base station 11a, the base station 11a transmits signals to the mobile station 12 with a transmission power Ptx11.

In step S52, the mobile station 12 receives the signals transmitted from the base station 11a, and measures the reception power Prx11 at the mobile station 12.

In step S53, the mobile station 12 obtains data of the transmission power Ptx11 of the base station 11a sent by the base station 11a.

In step S54, the mobile station 12 calculates the propagation loss L between itself and the base station 11a from the reception power Prx11 at the mobile station 12 and the transmission power Ptx11 of the base station 11a. The propagation loss L is expressed as below,

$$L=Ptx11/Prx11 \qquad (3)$$

The transmission power Ptx11 of the base station 11a is a known quantity, so if the transmission power Ptx11 of the base station 11a is stored in advance, the propagation loss L can be easily calculated from the above equation (3). Note that the base station 11a may also inform the mobile station 11a of its transmission power Ptx11. In this case, the same as the above, since the transmission power Ptx11 of the base station 11a is a known quantity, the propagation loss L can be easily calculated from equation (3).

In step S55, after obtaining the propagation loss L from the reception power Prx11 at the mobile station 12 and the transmission power Ptx11 of the base station 11a, from the following equation, the mobile station 12 estimates the reception power Prx12 at the base station 11a when the uplink transmission signals from the mobile station 12 are received at the base station 11a.

$$Prx12=Ptx12/L$$

In step S56, from the estimated reception power Prx12, the mobile station 12 makes reference to code assignment table 23, and determines the code multiplicity k corresponding to the estimated reception power Prx12.

In step S57, the mobile station 12 uses the determined code multiplicity k to transmit signals to the base station 11a with the transmission power Ptx12 at the mobile station 12.

In the above example, an explanation is made of a case in which the uplink transmission signal code multiplicity is determined. The same method is applicable to determination of the signal code multiplicity for downlink transmission.

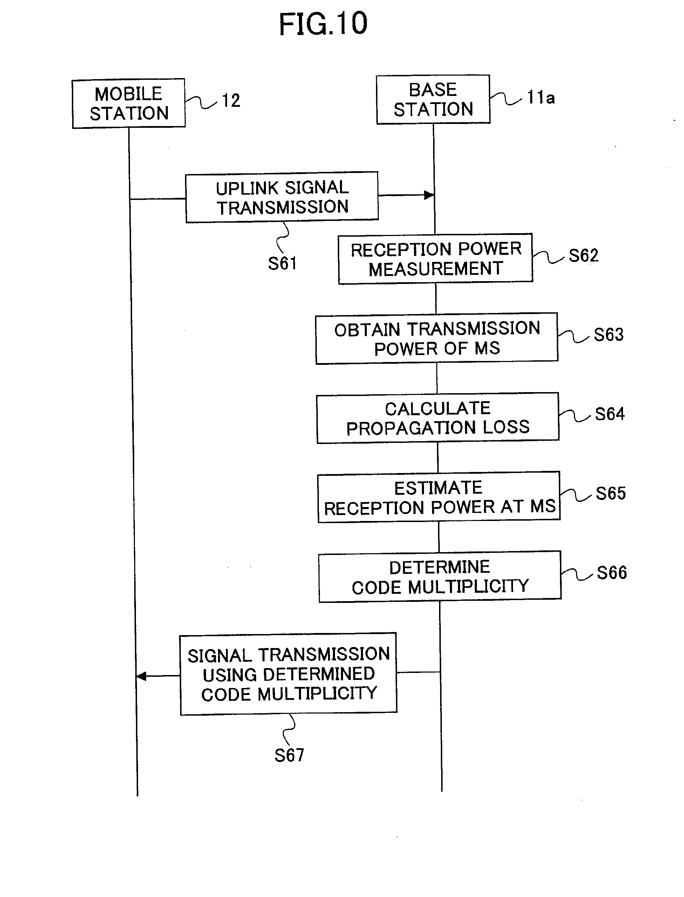

Next, following the sequence chart in FIG. 10, explanations are made of the operation for determining the code multiplicity k when signals are transmitted from the base station 11a to the mobile station 12.

FIG. 10 is a sequence chart showing an example of the operation for the mobile communication system shown in FIG. 8 for determining the code multiplicity k of the downlink transmission signals from the base station 11a to the mobile station 12. FIG. 10 is basically the same as FIG. 9, except that the roles of the base station 11a and the mobile station 12 are reversed compared with FIG. 9. In this case, the code assignment table to be used is stored in the base station 11a, and is modified relative to the code assignment table 23.

In step S61 as shown in FIG. 10, in the course of communication or at the beginning of communication between the mobile station 12 and the base station 11a, the mobile station 12 transmits signals to the mobile station 12 with a transmission power Ptx12.

In step S62, the base station 11a receives the signals transmitted from the mobile station 12, and measures the reception power Prx12 at the base station 11a.

In step S63, the base station 11a obtains data of the transmission power Ptx12 of the mobile station 12 sent by the mobile station 12.

In step S64, the base station 11a calculates the propagation loss L between itself and the mobile station 12 from the reception power Prx12 at the base station 11a and the transmission power Ptx12 of the mobile station 12.

In step S65, after obtaining the propagation loss L from the reception power Prx12 at the base station 11a and the transmission power Ptx12 of the mobile station 12, the base station 11a estimates the reception power Prx11 at the mobile station 12 when the downlink transmission signals from the base station 11a are received at the mobile station 12.

In step S66, from the estimated reception power Prx11, the base station 11a makes reference to the code assignment table in the base station 11a, and determines the code multiplicity k corresponding to the estimated reception power Prx11.

In step S67, the base station 11a uses the determined code multiplicity k to transmit signals to the mobile station 12 with the transmission power Ptx11 at the base station 11a.

In the second embodiment, it is explained that the propagation loss L between the mobile station 12 and the base station 11a is calculated at the mobile station 12 (or at the base station 11a) from the reception power Prx11 (or Prx12) at the mobile station 12 (or the base station 11a) and the transmission power Ptx11 of the base station 11a (or the transmission power Ptx12 of the mobile station 12), and from the calculated propagation loss L, the reception power of the mobile station 12 at the base station 11a (the reception power of the base station 11a at the mobile station 12) is estimated, and further the code multiplicity is determined.

Nevertheless, the propagation loss L can also be deduced from the distance D between the mobile station 12 and the base station 11a, and this distance D can be determined by the signal arrival time. For example, if the mobile station is equipped with positioning means, such as a GPS (Global Positioning System), the distance D can be calculated from the positions of the mobile station 12 and the base station 11a.

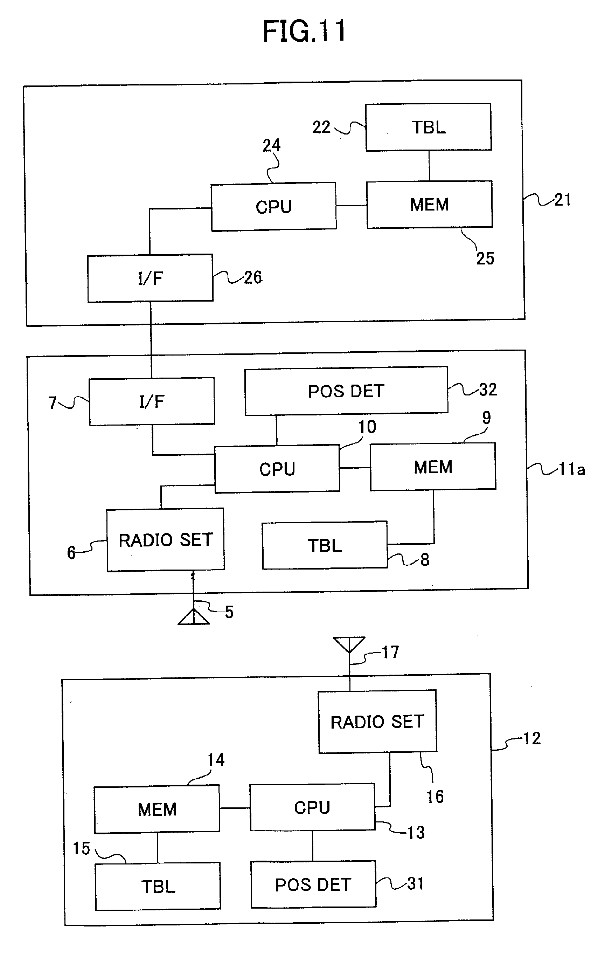

FIG. 11 is a schematic block diagram showing an example of a configuration of such a mobile communication system.

As shown in FIG. 11, the basic configuration of the mobile communication system shown in FIG. 11 is the same as that shown in FIG. 2, except for a position detector 31 in the mobile station 12 and a position detector 32 in the base station 11a.

The position detector 31 is used to measure the position of the mobile station 12, for example, it may be a GPS (Global Positioning System) receiver for measuring positions. The position detector 31 computes the position (for example, latitude and longitude) of the mobile station 12 according to the propagation time and the angle of arrival of radio waves from a number of base stations. From the point of view of improving precision, it is preferable to use a GPS receiver, whereas from the point of view of simplicity, it is preferable to use measurement methods based on trigonometric relationships other than GPS.

The position detector 32 is used for measuring the position of the base station 11a. The same as the position detector 31 in the mobile station 12, the position detector 32 may be any device capable of measuring the position by radio waves.

Furthermore, the propagation loss may also be calculated by the radio network controller 21. The details of the method may be easily formulated from the above descriptions, so specific explanations are omitted.

Summarizing the second embodiment, the mobile station 12 predicts the propagation environment between the mobile station 12 and the base station 11a from the reception power of the received signals, and determines the code multiplicity of the uplink transmission signals. On the other hand, the radio network controller 21 or the base station 11a predicts the propagation environment with the mobile station 12 from the reception power of the received signals, and determines the code multiplicity of the downlink transmission signals. That is to say, in this embodiment, the propagation environment is predicted from the amplitudes of the received signals, and the code multiplicity is determined in response to the propagation environment.

Therefore, code multiplicity may be increased in good propagation environment, and may be decreased in poor propagation environment. As a result, it is possible to provide communication service of sufficiently high quality constantly and a communication speed fit for the propagation environment. Furthermore, because it is the code multiplicity but not the spreading factor that is used as the parameter varied in response to the propagation environment, a complicated modulation and demodulation device is not necessary.

While the present invention has been described with reference to specific embodiments chosen for the purpose of illustration, it should be apparent that the invention is not limited to these embodiments, but numerous modifications could be made thereto by those skilled in the art without departing from the basic concept and scope of the invention.

Summarizing the effect of the present invention, a mobile station located in a good propagation environment is capable of high-speed communications, and a mobile station located in a poor propagation environment is capable of communications at relatively lower speed but without quality degradation.

Furthermore, because the code multiplicity is used as a parameter adjusted in response to the propagation environment, additional special modulation and demodulation devices are not necessary, so lower price and simplicity of devices is achievable.

This patent application is based on Japanese priority patent application No. 2002-113828 filed on April 16, 2002, the entire contents of which are hereby incorporated by reference.

## Claims

1. A radio station for transmitting signals to and receiving signals from a party thereof through a radio link by Code Division Multiple Access, comprising:

   a signal quality reception unit configured to receive information of quality of the signals having been transmitted by the radio station, received and sent to the radio station by the party, said information being measured from the received signals by the party; and
   a code multiplicity determination unit configured to determine a code multiplicity of signals transmitted from the radio station to the party based on the received information of signal quality,

   wherein the radio station transmits signals to the party by using the determined code multiplicity.

2. The radio station as claimed in claim 1, wherein the code multiplicity determination unit comprises a storage unit for storing a plurality of code multiplicities in correspondence with data of said quality of signals.

3. The radio station as claimed in claim 2, wherein said quality of signals includes one of a ratio of signal to noise, a ratio of signal to interference, and a signal error rate.

4. A radio station for transmitting signals to and receiving signals from a party thereof through a radio link by Code Division Multiple Access, comprising:

   a propagation loss calculation unit configured to calculate loss of power of signals in propagation from the radio station to the party;
   a reception power estimation unit configured to estimate signal reception power of the party using the signal transmission power of the radio station and the measured loss of power; and
   a code multiplicity determination unit configured to determine a code multiplicity of signals transmitted from the radio station to the party based on the estimated signal reception power of the party,

   wherein the radio station transmits signals to the party by using the determined code multiplicity.

5. The radio station as claimed in claim 4, wherein the propagation loss deduction unit comprises:

   a first unit configured to receive signals from the party and measure signal reception power of the radio station;
   a second unit configured to receive data of signal transmission power of the party; and
   a third unit configured to calculate the loss of power of signals in propagation using the signal reception power of the radio station and the signal transmission power of the party.

6. The radio station as claimed in claim 4, wherein the propagation loss calculation unit comprises a fourth unit configured to receive data of a distance between the radio station and the party, wherein said propagation loss calculation unit calculates the loss of power from the distance between the radio station and the party.

7. The radio station as claimed in claim 4, wherein the code multiplicity determination unit comprises a storage unit configured to store a plurality of code multiplicities in correspondence with data of said signal reception power of the party.

8. A radio network controller configured to control signal transmission and signal reception between radio stations through a radio link by Code Division Multiple Access, comprising:

a signal quality reception unit configured to receive information of quality of signals having been transmitted by a first radio station, received and sent to the radio network controller by a second radio station, said information being measured by the second radio station from the received signals;
a code multiplicity determination unit configured to determine a code multiplicity of signals transmitted from the first radio station to the second radio station based on the received information of signal quality; and
a unit configured to send the determined code multiplicity to the first radio station.

FIG.1

CELL 13a

21

RADIO NETWORK
CONTROLLER

11a  BASE
STATION

12

MOBILE
STATION

11b

BASE
STATION

CELL 13b

EP 1 355 433 A1

# FIG.2

# FIG.3

| SIR | CODE MULTIPLICITY k | |
| --- | --- | --- |
| | PRESENT CODE MULTIPLICITY | MODIFIED CODE MULTIPLICITY |
| a1 | 1 | b11 |
| | 2 | b12 |
| | 3 | b13 |
| | n | b1n |
| a2 | 1 | b21 |
| | 2 | b22 |
| | 3 | b23 |
| | n | b2n |
| a3 | 1 | b31 |
| | 2 | b32 |
| | 3 | b33 |
| | n | b3n |

EP 1 355 433 A1

# FIG.4

EP 1 355 433 A1

# FIG.5

EP 1 355 433 A1

# FIG.6

```
┌──────────────┐                          ┌──────────────┐
│   MOBILE     │ ⌇12                       │    BASE      │ ⌇11a
│   STATION    │                          │   STATION    │
└──────────────┘                          └──────────────┘
       │                                         │
┌──────────────────────┐                         │
│  DOWNLINK SIGNAL     │ ⌇S31                     │
│ QUALITY MEASUREMENT  │                         │
└──────────────────────┘                         │
       │                                         │
       │   ┌──────────────────┐                  │
       │   │  SIGNAL QUALITY  │                  │
       │   │   NOTIFICATION   │─────────────────▶│
       │   └──────────────────┘                  │
       │            ⌇                            │
       │           S32           ┌───────────────────────┐
       │                         │   DETERMINE CODE      │ ⌇S33
       │                         │ MULTIPLICITY WITH     │
       │                         │   SIGNAL QUALITY      │
       │                         └───────────────────────┘
       │   ┌──────────────────────┐                │
       │   │  SIGNAL TRANSMISSION │                │
       │◀──│  USING DETERMINED    │────────────────│
       │   │  CODE MULTIPLICITY   │                │
       │   └──────────────────────┘                │
       │            ⌇                              │
       │           S34                             │
```

# FIG.7

```
┌──────────┐              ┌──────────┐
│   BASE   │╲ 11a         │  MOBILE  │╲ 12
│ STATION  │              │ STATION  │
└──────────┘              └──────────┘
     │                         │
┌─────────────────────┐        │
│   UPLINK SIGNAL     │╲ S41   │
│ QUALITY MEASUREMENT │        │
└─────────────────────┘        │
     │   ┌─────────────────┐   │
     ├──▶│ SIGNAL QUALITY  │──▶│
     │   │  NOTIFICATION   │   │
     │   └─────────────────┘   │
     │           ╲             │
     │           S42   ┌──────────────────┐
     │                 │  DETERMINE CODE  │╲ S43
     │                 │ MULTIPLICITY WITH│
     │                 │  SIGNAL QUALITY  │
     │                 └──────────────────┘
     │  ┌──────────────────┐    │
     │◀─│SIGNAL TRANSMISSION│◀──│
     │  │ USING DETERMINED  │   │
     │  │ CODE MULTIPLICITY │   │
     │  └──────────────────┘    │
     │           ╲              │
     │          S44             │
```

# FIG.8

CODE ASSIGNMENT TABLE 23

| P | CODE MULTIPLICITY k |
|---|---|
| P1 | 1 |
| P2 | 2 |
| P3 | 3 |
| ... | ... |
| Pn | n |

CELL 13a

BASE STATION

11a

MOBILE STATION

12

BASE STATION

11b

CELL 13b

EP 1 355 433 A1

# FIG.9

| BASE STATION | ~11a |
| MOBILE STATION | ~12 |

DOWNLINK SIGNAL TRANSMISSION

~S51

RECEPTION POWER MEASUREMENT ~S52

OBTAIN TRANSMISSION POWER OF BS ~S53

CALCULATE PROPAGATION LOSS ~S54

ESTIMATE RECEPTION POWER AT BS ~S55

DETERMINE CODE MULTIPLICITY ~S56

SIGNAL TRANSMISSION USING DETERMINED CODE MULTIPLICITY

~S57

# FIG.10

```
┌─────────┐                    ┌─────────┐
│ MOBILE  │ ～12              │  BASE   │ ～11a
│ STATION │                    │ STATION │
└────┬────┘                    └────┬────┘
     │                              │
     │    ┌──────────────────┐      │
     │    │  UPLINK SIGNAL   │─────▶│
     ├────│  TRANSMISSION    │      │
     │    └──────────────────┘      │
     │           ⌇                  │
     │          S61        ┌──────────────────┐
     │                     │ RECEPTION POWER  │ ～S62
     │                     │  MEASUREMENT     │
     │                     └──────────────────┘
     │                              │
     │                    ┌──────────────────┐
     │                    │ OBTAIN TRANSMISSION │ ～S63
     │                    │  POWER OF MS     │
     │                    └──────────────────┘
     │                              │
     │                     ┌──────────────────┐
     │                     │   CALCULATE      │ ～S64
     │                     │ PROPAGATION LOSS │
     │                     └──────────────────┘
     │                              │
     │                     ┌──────────────────────┐
     │                     │    ESTIMATE          │ ～S65
     │                     │ RECEPTION POWER AT MS │
     │                     └──────────────────────┘
     │                              │
     │                     ┌──────────────────┐
     │                     │   DETERMINE      │ ～S66
     │                     │ CODE MULTIPLICITY│
     │                     └──────────────────┘
     │                              │
     │  ┌────────────────────┐      │
     │  │ SIGNAL TRANSMISSION│      │
     ◀──│ USING DETERMINED   │──────│
     │  │ CODE MULTIPLICITY  │      │
     │  └────────────────────┘      │
     │           ⌇                  │
     │          S67                 │
     │                              │
```

# FIG.11

**EP 1 355 433 A1**

---

**European Patent Office**

## EUROPEAN SEARCH REPORT

Application Number

EP 03 25 2342

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 187 370 A (LUCENT TECHNOLOGIES INC) 13 March 2002 (2002-03-13) * abstract; figure 2 * * column 4, paragraph 14 * * column 5, paragraph 16 - column 6, paragraph 19 * | 1-8 | H04B1/707 H04B7/26 H04Q7/38 |
| Y | US 5 745 480 A (BEHTASH SAMAN ET AL) 28 April 1998 (1998-04-28) * abstract * * column 1, line 63 - column 2, line 31 * * column 4, line 46 - line 54 * | 1-8 | |
| Y | C-L I ET AL: "MULTI-CODE CDMA WIRELESS PERSONAL COMMUNICATIONS NETWORKS" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), NEW YORK, IEEE, US, vol. 2, 18 June 1995 (1995-06-18), pages 1060-1064, XP000533158 ISBN: 0-7803-2487-0 * abstract * * page 1061, left-hand column - page 1062, left-hand column * | 1-8 | |
| Y | EP 0 887 948 A (NOKIA MOBILE PHONES LTD) 30 December 1998 (1998-12-30) * abstract; figure 3 * * page 2, line 48 - line 53 * * page 3, line 26 - line 41 * * page 4, line 56 - page 5, line 24 * | 1-8 | TECHNICAL FIELDS SEARCHED (Int.Cl.7) H04B H04Q H04J |
| A | EP 0 938 198 A (NIPPON TELEGRAPH & TELEPHONE) 25 August 1999 (1999-08-25) * the whole document.* | 1-8 | |

-/--

The present search report has been drawn up for all claims

| Place of search | Date of completion of the search | Examiner |
|---|---|---|
| MUNICH | 7 July 2003 | Ricciardi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 03 25 2342

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 182 803 A (MATSUSHITA ELECTRIC IND CO LTD) 27 February 2002 (2002-02-27) * the whole document * --- | 1-8 | |
| A | WO 01 73992 A (FUJITSU LTD ;NAKAMURA TADASHI (JP)) 4 October 2001 (2001-10-04) * abstract * | 1-8 | |
| A,P | -& EP 1 271 824 A (FUJITSU LIMITED) 2 January 2003 (2003-01-02) * the whole document * --- | | |
| A | US 6 335 924 B1 (DOI NOBUKAZU ET AL) 1 January 2002 (2002-01-01) * abstract * * column 5, line 15 - line 48 * ----- | 1-8 | |

TECHNICAL FIELDS
SEARCHED     (Int.Cl.7)

The present search report has been drawn up for all claims

| Place of search | Date of completion of the search | Examiner |
|---|---|---|
| MUNICH | 7 July 2003 | Ricciardi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 25 2342

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2003

| Patent document cited in search report | | | Publication date | Patent family member(s) | | Publication date |
|---|---|---|---|---|---|---|
| EP 1187370 | A | | 13-03-2002 | CA | 2357092 A1 | 11-03-2002 |
| | | | | CN | 1344074 A | 10-04-2002 |
| | | | | EP | 1187370 A1 | 13-03-2002 |
| | | | | EP | 1322051 A1 | 25-06-2003 |
| | | | | JP | 2002152849 A | 24-05-2002 |
| US 5745480 | A | | 28-04-1998 | AU | 2547197 A | 22-10-1997 |
| | | | | BR | 9708689 A | 04-01-2000 |
| | | | | CN | 1215517 A | 28-04-1999 |
| | | | | EP | 0888674 A1 | 07-01-1999 |
| | | | | WO | 9737457 A1 | 09-10-1997 |
| EP 0887948 | A | | 30-12-1998 | US | 6137789 A | 24-10-2000 |
| | | | | EP | 0887948 A2 | 30-12-1998 |
| | | | | JP | 11074835 A | 16-03-1999 |
| | | | | US | 6510148 B1 | 21-01-2003 |
| EP 0938198 | A | | 25-08-1999 | EP | 0938198 A1 | 25-08-1999 |
| | | | | CA | 2261138 A1 | 19-11-1998 |
| | | | | CN | 1227020 T | 25-08-1999 |
| | | | | WO | 9852307 A1 | 19-11-1998 |
| | | | | KR | 2000023829 A | 25-04-2000 |
| | | | | US | 2002094011 A1 | 18-07-2002 |
| EP 1182803 | A | | 27-02-2002 | JP | 2001285180 A | 12-10-2001 |
| | | | | AU | 4106201 A | 15-10-2001 |
| | | | | BR | 0105567 A | 19-03-2002 |
| | | | | CA | 2375031 A1 | 11-10-2001 |
| | | | | EP | 1182803 A1 | 27-02-2002 |
| | | | | CN | 1365551 T | 21-08-2002 |
| | | | | WO | 0176103 A1 | 11-10-2001 |
| | | | | US | 2002160721 A1 | 31-10-2002 |
| WO 0173992 | A | | 04-10-2001 | WO | 0173992 A1 | 04-10-2001 |
| | | | | EP | 1271824 A1 | 02-01-2003 |
| | | | | US | 2003026327 A1 | 06-02-2003 |
| US 6335924 | B1 | | 01-01-2002 | US | 5870393 A | 09-02-1999 |
| | | | | US | 5559790 A | 24-09-1996 |
| | | | | US | 2002028692 A1 | 07-03-2002 |
| | | | | JP | 7038496 A | 07-02-1995 |

EPO FORM P0459

For more details about this annex : see Official Journal of the European Patent Office, No. 12/82